# EUROPEAN PATENT SPECIFICATION

(11) **EP 3 091 066 B1**
(45) Date of publication and mention of the grant of the patent: **12.07.2017**
(21) Application number: 15166572.6
(22) Date of filing: 06.05.2015
(51) Int. Cl.: C11D 1/835, C11D 3/20, C11D 3/37, C11D 3/38, C11D 3/384, C11D 3/43, C11D 3/48, C11D 17/00, C09G 1/12

(54) **VEHICLES ANHYDROUS CARE PRODUCTS**
WASSERFREIE FAHRZEUGBEHANDLUNGSMITTEL
PRODUITS ANHYDRES POUR TRAITER DES VÉHICULES

(43) Date of publication of application: 09.11.2016
(73) Proprietor: Latvijas Universitate, 1586 Riga (LV)
(72) Inventor: Arbidans, Lauris, LV- 3004 Jelgava (LV); Kviesis, Jorens, LV-1073 Riga (LV); Porsnovs, Dmitrijs, LV-1082 Riga (LV); Seglins, Valdis, LV-1005 Riga (LV); Kokins, Aigars, LV-1003 Riga (LV); Stinkulis, Girts, LV-1063 Riga (LV); Kukela, Agnese, LV-2011 Jurmala (LV); Mutere, Olga, LV-1029 Riga (LV); Strikauska, Silvija, LV-3001 Jelgava (LV); Steinberga, Vilhelmine, LV-1063 Riga (LV); Madars, Davids, LV-4301 Aluksne (LV); Vecstaudza, Dagnija, Varakjani (LV); Berzins , Andrejs, LV-1067 Riga (LV); Sirokovs, Andrejs, LV-1062 Riga (LV); Klavins , Maris, LV-1026 Riga (LV)
(74) Representative: Fortuna, Aleksandra

(56) References cited:
- WO-A1-2009/037445
- GB-A- 2 358 639
- US-A- 5 330 787
- US-A- 5 866 532

## Description

### Technical Field

The invention relates to vehicles cleaning and care composition suitable for washing and waxing of painted metal external surfaces of vehicles. In particular, the invention relates to detergent for vehicle surfaces cleaning and simultaneous overlaying surfaces of vehicle with detergent-resistant wax, completely removing the organic materials and disinfecting the surfaces, which are being cleaned.

### Background Art

The use of different compositions of detergents and surfactants for cleaning and care of vehicles is everyday's need for contemporary society. The need for vehicle cleaning is determined not only by aesthetic reasons, but also by safety considerations, by wish to prolong vehicle body durability and the need to wax and polish vehicles, which in its turn not only affects the appearance of the vehicle, but also its aerodynamic performance and controlling. Generally a car body washing and waxing are separate processes: first it is necessary to wash the car, including wetting, treating with surfactant solution and flushing with a considerable amount of water, and only after draining is done waxing and polishing. This makes vehicle washing for lasting multi-stage process, which in addition causes significant adverse effects on the environment due to being associated with surfactant substances, greases, tar and other harmful impurities-containing waste water arising in large amounts in the result of such operation. Therefore the use of combined (washing and waxing) car-care preparations have obvious advantages. The fact that traditional detergent compositions do not form wax coating to protect paint surfaces from scratches caused by the abrasive dirt during the washing process shall be recognized as its deficiency. Water hardness, caked petroleum products and tar-containing dirt can significantly degrade the vehicles traditional washing process efficiency and increase the amount of waste water. The essence of the proposed improvement is to reduce water consumption and by that also the environmental impact caused by the vehicle body-care process.

The content of dirt deposited on the car surfaces can be very different, it depends on the road surfaces, car type and size, weather conditions and the type of the vehicle. Mostly dirt layer consists of insoluble, inorganic substances of mineral origin (particles of clay, quartz grain, iron oxides, volcanic dust and the like), soluble inorganic substances (sodium chloride, potassium chloride, magnesium salts and the like), fuel components, fat, tar, tire degradation products and other substances which could be found in the environment. A substantial part of car body pollution forms up of the biological material that settles on the car surfaces from the atmosphere, roads, animals, people with whom a car can come into contact, as well in the result of other processes [1]. Said biological material can include bacteria, viruses, fragments of virus membranes, DNA, cysts, also toxins and other organic substances formed in the result of biological activity of living organisms [2]. Considering growing threats of regional epidemics, global pandemics, biological terrorism and the like, biological safety becomes a necessity that requires new solutions, including vehicle maintenance area. Particularly important biological security issues are regarding to care of cars used in public transport, cars of emergency services and military vehicles. When creating vehicle care compositions, the objective of preventing the deposition of biological material is not usually highlighted, and this problem is not currently considered to be solved.

There are number of solutions for simultaneous non-aqueous car washing and waxing without forming of waste water. The existing solutions are mostly based on two-phase systems, where the anhydrous phase consists of highly hydrophobic substances such as paraffin, polysiloxane, mixtures thereof with organohalogens, etc., while the water phase comprises a water-soluble organic solvent (such as lower alcohol, ketone, etc.) and cationic and/or anionic surfactants.

There is also known a composition, comprising surfactant (sodium lauryl sulfate), isopropyl alcohol (15 %), water (50%), paraffin (10 %) and pesticide (toxaphene) [3], as well as a composition consisting from modified silicone, a cationic emulsifier and a dispersant [4]. There are also known anhydrous sprayable compositions consisting of polysiloxane and acrylic polymer [5], and a sprayable biodegradable composition [6] containing a surfactant. However, the known compositions do not fully prevent damage caused by abrasive dirt components during washing process and do not provide complete biological material removal, and disinfection of the surfaces being cleaned.

### Disclosure of the Invention

The aim of the invention is to improve anhydrous cleaning by reducing an adverse impact of the abrasive particles contained in dirt on the surfaces to be cleaned and by increasing the biological safety of the cleaned surfaces as well as by the way of application of the composition simultaneously cleaning and waxing the exterior surfaces of the car. The proposed composition and the way of its application does not provide the necessity to rinse with water car surfaces after cleaning of the surfaces, so it is a water-saving technology. The invention also includes the application technology of the product, which technology containing the treatment of the surfaces, ensuring high effectiveness of cleaning, waxing and disinfecting, and reduces the consumption of the cleaning agent, as well as ensures complete removal of biological material and long-term disinfection of the treated surfaces.

The objectives of the invention are achieved by the proposed composition for anhydrous vehicles-cleaning and the way of its application. The proposed composition comprises combination of two homogeneous mixtures, one of which is anhydrous and the other is an aqueous phase.

The proposed composition consists of the following components:
- a component A - a silicone blend comprising: a) from high to medium viscosity silicone fluid between 35% by weight and 65% by weight, such as poly-dimethxyl-siloxane having a viscosity from 200 to 100000 cSt at 25°C; b) a wax, for example, silicone wax or a wax of natural origin, for example carnauba wax or bees wax from 0.5% by weight to 5% by weight;
- a component B - a mixture of surfactants from 25% by weight to 60% by weight, containing (i) a mixture of an amine oxide (N-oxide) being substituted at the nitrogen atom and polyoxyethylene fatty alcohol ethers (alkylene oxide adducts of higher alcohols) from 1 to 20% by weight from the surfactant; and (ii) alkylderivatives of benzylammonium between 80 and 99% by weight of the surfactant;
- a component C - an organic solvent miscible in water between, being in the amount of 3 to 20% by weight, represented by any kind of lower alcohols (mono- or di-substituted C₂ - C₄); lower ketones (C₃ - C₅) (for example acetone, metyletylketon and the like) or lower ethers in admixture with lower carbon acids in the amount from 2 to 5% by weight and water in the amount of 0 to 5% by weight.

Optionally, the present composition may contain a dye and a fragrance. The composition can be packaged as aerosol spray, in a pump spray container and the like.

The component A is a silicone blend, consisting of alkylmodified polymeric silica, such as polydimethxylsiloxane, polydiethxylsiloxane or other siloxane derivative, preferably polydimethxylsiloxane (polydimethxylsiloxane is industrially produced oil having viscosity optimal for the intended purposes - between 300 and 500 cSt at 25°C). The use of alkylmodified polymeric silica derivative ensures solubilising of greasy and fat elements of dirt, and forming of stable emulsion. The content of alkylmodified polymeric silica is between 35 % and 65 % parts by weight, preferably 45 %. The second ingredient of the component A is a synthetic or natural wax. The wax which can be included in the composition is selected from plant waxes such as carnauba wax, animal waxes such as beeswax and synthetic waxes such as silicone waxes. The proposed combination also may contain the combination of aforesaid waxes. The silicone wax can be partly or fully methylated silicone resin, for example, trimethylated silica wax. Natural wax may be beeswax or carnauba wax, preferably in the form of wax emulsion. The content of wax is between 0.5 and 5 %, preferably 2.5 %.

The surfactant in the composition of the component B being a mixture of an amine oxide (N-oxide) substituted at the nitrogen atom and polyoxyethylene fatty alcohol ethers contains an amine oxide di-substituted at the nitrogen atom, of the formula (1) 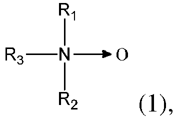 where R₁ and R₂ are C₁ - C₄ alkyl derivatives and R₃ is C₆ - C₁₈ alkyl derivatives.

The presence of amine oxides in the proposed composition ensures high surfactant activity and the ability to remove specific impurities, which are inherent to vehicles surfaces, it minimally changes the pH of the composition, as well as ensures the disinfectant properties of the proposed composition. An ability of the amine oxide applied to interact with the treated surfaces ensures long lasting antimicrobial effect of the cleaned surfaces.

Further, surfactant being a mixture of an amine oxide (N-oxide) substituted at the nitrogen atom and polyoxyethylene fatty alcohol ethers in the composition of the component B contains polyoxyethylene fatty alcohol ethers, having formula (2)

CH₃(CH₂)ₙ-O(CH₂CH₂O)ₘ^{H} (2),

where n is 3-8; m is 2-20.

The presence of the alkylene oxide adducts of higher alcohols in the proposed vehicles-cleaning composition ensures high ability to interact with mineral substances and organic substances present in the dirt, with other ingredients of the composition as well as ability to interact with the biological material.

Another surfactant of the component B contains alkylderivatives of benzylammonium, preferably having the formula (3) 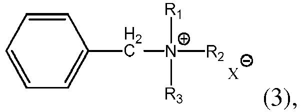 where R₁, R₂ and R₃ is C₁ - C₄ alkyl; X⁻ is F⁻, Cl⁻, Br⁻ or other salt of strong inorganic acid.

Alkylderivatives of benzylammonium in the proposed vehicles-cleaning composition ensure high washing properties of the surfactant composition, and also strongly interact with the external membranes of living cells and negatively charged particles of structurally and functionally significant biomolecules. As said surfactant is particularly active with regard to the negatively charged particles (e.g., clay), it is less effective with respect particles contaminated with tar, grease and other organic substances. The surfactant being a mixture of amine oxide (N-oxide) substituted at the nitrogen atom and polyoxyethylene fatty alcohol ethers in turn is more effective for removal of particles of tar, organic matter and similar substances. Thus each component alone is considered to be less suitable to achieve the set task than the proposed combination. The surfactants in combination with the proposed silicone blend ensure high cleaning ability without excessive foaming of the proposed composition.

The content of the component B in the composition is between 25.0 and 60.0% by weight, preferably 45.0% by weight. The above-mentioned combination of the ingredients of the component B ensures disinfection ability of the whole vehicles-cleaning composition, based on the described individual properties of the substances, as well as the synergistic interaction between the surfactants with highly hydrophobic silicon compound (for example polydimethxylsiloxane), which provide the composition reaction with cell components such as cell membranes, DNA and functionally significant proteins. The antimicrobial effect is achieved without addition of pesticides or other substances with high toxicity, using only the described surfactant combination.

The component C is an organic solvent miscible in water being in the amount of 0 to 20% by weight, lower carboxylic acids in the amount between 2.0 and 5.0% by weight and water in the amount of 0 to 10.0% by weight in mixture with of any of the lower alcohols (mono- or di-substituted C₂ - C₄), lower ketones (C₃ - C₅), (such as acetone, methyl ethyl ketone or the like) or the lower ethers. The lower carboxylic acids are formic acid, acetic acid, propionic acid and other carboxylic acids with a number of C atoms <4. The presence of C component provides good solubility of the surfactants used.

The way of application of the proposed composition for non-aqueous vehicles-cleaning is directed to simultaneous cleaning and waxing of the painted surfaces. The method contains: application of the proposed anhydrous car care product in the form of spray and wiping the surfaces, preferably by microfiber cloth until the surface is dry and shiny.

The described composition is recommended for use in aerosol or spray form. The composition is suitable for filling in aerosol dispenser or pressurised gas container of any design. The use of aerosol of spray is recommended for both pre- and cleaning steps. However, this product may be applied also in other ways: by using impregnated tissues, sponges or similar media, suitable for application of the composition to the surfaces being cleaned. Prior to use the described product can be diluted with sufficient amount of water, preferably demineralised water. The product is suitable for cleaning of all kind of vehicles (light-duty vehicles, motorcycles, heavy vehicles, etc.) or specifically contaminated parts of the vehicles. Cars contaminated with biological material can be treated similar, but in case of persistent contamination (such as blood), it is advisable to repeat the cleaning process. In case of possible dangerous biological contamination it is necessary to use individual biological hazard defence tools (glasses, respirators, gloves and biological defence coats). The suggested way of the application of the proposed composition for non-aqueous vehicles-cleaning ensures reduction of the possible risk of dissemination of contamination, due to the fact that the cleaning process does not produce waste water and all the material collected from the car surfaces to be cleaned remains onto cloth material used during the car cleaning final stage, this material can be easily subjected to disinfection or destroyed.

The proposed composition for non-aqueous vehicles-cleaning is to be diluted with water at a ratio of 1 to 8-20, the preferably 1:10.

### Examples of Implementation of the Invention

To prepare the composition, the component C is placed in a container with a mixer, then the ingredients of the component B are added, and at the end - the component A. The resulting mixture is stirred for about 30 minutes until it is uniformly mixed. The component A is being added to the obtained mixture of the components C and B and mixing is continued until forming of smooth slurry (about 30 minutes).

### Example 1

4.5 kg (45%) polydimethylsiloxane (viscosity 300-500 cSt at 25°C) is placed in the 20 1 reactor and during stirring 200 g (2%) of trimethilsilicone wax is added. The mixture is stirred for 2 hours, until homogenous mixture (component A) is obtained. Then 0.5 kg of dodecilamine N-oxide, 1.8 kg of hexilalkohol thetraoxiethilene ether, 1.2 kg of trimethilbenzilammonium chloride, 1 kg of ethanol, 0.3 kg of acetic acid, 500 ml of water are added and stirred for 0.5 hours. 10 kg of composition is obtained.

### Example 2

5.5 kg (55%) of polydimethylsiloxane (viscosity 1000-50000 cSt at 25°C) is placed in the 20 l reactor and during stirring 0.5 kg (0.5%) of carnauba wax is added. The mixture is stirred for 5 hours, until homogenous mixture (component A) is obtained. Then 0.5 kg of dodecilamine N-oxide, 2.5 kg of trimethilbenzilammonium chloride, 0.8 kg of isopropanol and 0.2 kg of acetic acid are added and the mixture is stirred for 0,5 hours. 10 kg of composition is obtained.

### Example 3

4 kg (40%) of polydimethylsiloxane (viscosity 2000-50000 cSt at 25 ° C) is placed in the 20 1 reactor and during stirring 0.5 kg (0.5%) of bee wax is added. The mixture is stirred for 2 hours, until homogenous mixture is formed. Then 1 kg of dodecilamine N-oxide, 1.3 kg of hexilalkohol thetraoxiethilene ether, 0.8 kg of ethanol, 0.2 kg of acetic acid are added, the mixture is stirred for 0.5 hours. 10 kg of composition is obtained.

The resulting product contains 2 phases: 1) (the upper) consists of the component A and is transparent (sorption in UV spectra at 320 nm does not exceed 0.05 AU), it has a specific gravity of 0.955-975 m/cm³, refraction coefficient 1.380 - 1.500; 2) the lower is blue to dark-blue, with a specific smell, having pH value from 5.10 to 5.50 and has a solid particles content less than 1.5 g/cm³ by weight, refraction coefficient 1.25 - 1.4. The surfactant composition significantly reduces the surface tension of water (from 72 mN/m to <30 mN/m). The product can be stored as a mixture of the two ingredients in one container.

Vehicle surface treatment with the composition according to the description ensures complete removal of bacteria, fungi, viruses and fragments thereof and biologically active biomolecules. The antimicrobial activity tests of the treated surfaces indicate the complete absence of any microorganisms and the antimicrobial effect instantly after treatment, as well as a week later. The disinfectant effect is proved by using micro-organisms: 1) *Pseudomonas aeruginosa*; 2) *Staphylococcus aureus*; 3) *Candida albicans*; 4) *Aspergillus niger.* Antimicrobial exposure tests were carried out using the agar diffusion method. The selected bacteria were both Gram positive and Gram negative and are widespread in soil and waters. Development of microbial inhibition depends on the concentration of the applied product and the type of microorganism, but a minimum disinfectant effect is ensured for at least 3 days.

### Cited Sources of Information

1. Genuino H.C., Opembe N. N., Njagi E. C., McClain S., Suib S.L. (2012) A review of hydrofluoric acid and its use in the car wash industry. Journal of Industrial and Engineering Chemistry 18, pages 1529-1539.
2. Calvo A.I. , Alves C., Castro A., Pont V., Vicente A.M., Fraile R. (2013), Research on aerosol sources and chemical composition: Past, current and emerging issues. Atmospheric Research (120-121), pages 1-28.
3. Shahram G.R. 2008. Non-aqueous carwash liquid composition and method for producing the same. US 7,552,737.
4. Howe M.W. 1996. Automotive protectant for use with cleaning compositions. US 5518533.
5. Serobian A. 2008. Sprayable dry wash and wax composition comprising silicone blend and acrylic-based polymer. US 7399738.
6. Schulz M.A., Joseph II F.W., Deddo M.A. 2011. Sprayable wash and wax composition. US 7981853.

## Claims

1. A vehicles cleaning composition for simultaneous washing, waxing and disinfection of vehicle surfaces, the composition comprising: silicone blend, surfactants, an organic solvent miscible in water and water, **characterized in that** the silicone blend is a mixture of silicone fluid, and synthetic or natural wax, wherein the surfactants are: (i) a mixture of amine oxide (N-oxide) being substituted at the nitrogen atom and polyoxyethylene fatty alcohol ethers, and (ii) surfactant having the following formula: 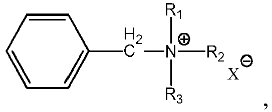 where R₁, R₂ and R₃ is C₁ - C₄ alkyl; X⁻ is F⁻, Cl⁻, Br⁻ or other salt of strong inorganic acid;
wherein the content of components of the composition is as follows, wt%:
| | |
|---|---|
| silicone fluid | 35.0 - 65.0 |
| wax of synthetic or natural origin | 0.5 - 5.0 |
| surfactants | 25.0 - 60.0 |
| organic solvent miscible in water | 3.0 - 20.0 |
| Water | 0 - 10.0. |

2. The composition according to Claim 1, wherein the silicone fluid is alkyl modified silica polymer having viscosity of 200-100000 cSt at 25°C.

3. The composition according to Claim 2, wherein the alkilmodified silica polymer is polydimethylsiloxane.

4. The composition according to any of the preceding claims, wherein the natural origin wax is carnauba wax or bee wax.

5. The composition according to any of the preceding claims, wherein the synthetic origin wax is silicone wax.

6. The composition according to any of the preceding claims, wherein content of the surfactant being a mixture of amine oxide (N-oxide) substituted at the nitrogen atom and polyoxyethylene fatty alcohol ethers is 1-20% of the total content of the surfactants.

7. The composition according to any one of the preceding claims, wherein the surfactant being a mixture of amine oxide (N-oxide) substituted at the nitrogen atom and polyoxyethylene fatty alcohol ethers is a mixture of N,N- dimethildodecilamine N-oxide and fatty acid alcohol ether of polyoxiethylene.

8. The composition according to any of the preceding claims, wherein content of the surfactant having the following formula: 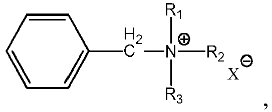 where R₁, R₂ and R₃ is C₁ - C₄ alkyl; X⁻ is F⁻, Cl⁻, Br⁻ or other salt of strong inorganic acid; is 80-99% of the total content of surfactants.

9. The composition according to any of the preceding claims, wherein the organic solvent miscible in water is any of the lower alcohols (mono- or di-substituted C₂ - C₄) or lower ketones (C₃ - C₅) mixed with lower carboxylic acids (C₁ - C₄) (mono- or di-substituted (C₁ - C₄), and content of the lower carboxylic acid is 2.0 to 5.0% by weight of an organic solvent.

10. The composition according to any of the preceding claims, wherein it is diluted with water in ratio 1: 8 to 20, preferably 1:10.

11. A tissue, cloth or sponge impregnated with the composition according to any of the preceding claims.

## Patentansprüche

1. Fahrzeugreinigungsmittel zum gleichzeitigen Waschen, Wachsen und Desinfizieren von Fahrzeugoberflächen, wobei die Zusammensetzung umfasst: Silikonmischung, oberflächenaktive Mittel, ein in Wasser und Wasser mischbares organisches Lösungsmittel, **dadurch gekennzeichnet, dass** die Silikonmischung eine Mischung aus Silikonflüssigkeit und synthetischem oder natürlichem Wachs ist, wobei die Tenside: (I) eine Mischung aus Aminoxid (N-Oxid) sind, die am Stickstoffatom und Polyoxyethylenfettalkoholäther substituiert sind, und (ii) ein oberflächenaktives Mittel mit folgender Formel: 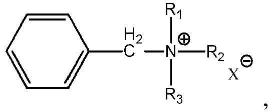 dabei sind R₁, R₂ und R₃ C₁ - C₄ Alkyl; X⁻ ist F⁻, Cl⁻, Br⁻ oder ein anderes Salz mit stark anorganischer Säure;
wobei der Gehalt an Komponenten der Zusammensetzung wie folgt ist: Gew.%:
| | |
|---|---|
| Silikonflüssigkeit | 35,0 - 65,0 |
| Wachs synthetischen oder natürlichen Ursprungs | 0,5 - 5,0 |
| Oberflächenaktive Mittel | 25,0 - 60,0 |
| Organisches Lösungsmittel in Wasser mischbar | 3,0 - 20,0 |
| Wasser | 0 - 10,0. |

2. Zusammensetzung nach Anspruch 1, wobei das Silikonfluid ein alkylmodifiziertes Siliciumdioxidpolymer mit einer Viskosität von 200-100000 cSt bei 25 °C ist.

3. Zusammensetzung nach Anspruch 2, wobei das alkilmodifizierte Siliciumdioxidpolymer ein Polydimethylsiloxan ist.

4. Zusammensetzung nach einem der vorhergehenden Ansprüche, wobei das natürliche Ursprungswachs Carnaubawachs oder Bienenwachs ist.

5. Zusammensetzung nach einem der vorhergehenden Ansprüche, wobei das synthetische Ursprungswachs ein Silikonwachs ist.

6. Zusammensetzung nach einem der vorhergehenden Ansprüche, wobei der Gehalt des oberflächenaktives Mittels ein Gemisch aus Aminoxid (N-Oxid) ist, das am Stickstoffatom und an den Polyoxyethylenfettalkoholethern substituiert ist und 1-20 % des Gesamtgehalts der oberflächenaktiven Mittel beträgt.

7. Zusammensetzung nach einem der vorhergehenden Ansprüche, wobei der Gehalt des oberflächenaktives Mittels ein Gemisch aus Aminoxid (N-Oxid) ist, das am Stickstoffatom und an den Polyoxyethylenfettalkoholethern substituiert ist, ein Gemisch aus N, N-Dimethildodecilamin-N-oxid und Polyoxyethylenfettalkoholethern ist.

8. Zusammensetzung nach einem der vorhergehenden Ansprüche, wobei der Gehalt des oberflächenaktiven Mittels die folgende Formel hat: 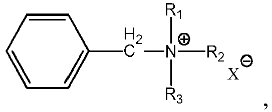 dabei sind R₁, R₂ und R₃ C₁ - C₄ Alkyl; X⁻ ist F⁻, Cl⁻, Br⁻ oder ein anderes Salz mit stark anorganischer Säure ist
und 80-99 % der gesamten oberflächenaktiven Mittel beträgt.

9. Zusammensetzung nach einem der vorhergehenden Ansprüche, wobei das in Wasser mischbare organische Lösungsmittel eines der niederen Alkohole (mono- oder disubstituierte C₂ - C₄) oder niederen Ketone (C₃ - C₅) ist, die mit niederen Carbonsäuren (C₁ - C₄) (mono- or di-substituted (C₁ - C₄) gemischt werden, und der Gehalt der niederen Carbonsäure 2,0 bis 5,0Gew.% eines organischen Lösungsmittels beträgt.

10. Zusammensetzung nach einem der vorhergehenden Ansprüche, **dadurch gekennzeichnet, dass** sie mit Wasser im Verhältnis 1 verdünnt wird: 8 bis 20, vorzugsweise 1:10.

11. Gewebe, Tuch oder Schwamm, imprägniert mit der Zusammensetzung nach einem der vorhergehenden Ansprüche.

## Revendications

1. Composition de nettoyage de véhicules pour le lavage, le lustrage et la désinfection simultanés de surfaces de véhicules, la composition comprenant : un mélange de silicone, des agents tensioactifs, un solvant organique miscible dans l'eau et de l'eau, **caractérisée en ce que** le mélange de silicone est un mélange de fluide de silicone et de cire synthétique ou naturelle, dans laquelle les agents tensioactifs sont : (i) un mélange d'oxyde d'amine (N-oxyde) étant substitué au niveau de l'atome d'azote et d'éthers d'alcool gras polyoxyéthylène, et (ii) un agent tensioactif possédant la formule suivante : 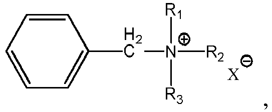 où R₁, R₂ et R₃ sont un alkyle en C₁ à C₄ ; X⁻ est F⁻, Cl⁻, Br⁻ ou un autre sel d'un acide inorganique fort ;
dans lequel la teneur en composants de la composition est comme suit, en % en poids :
| | |
|---|---|
| fluide de silicone | 35,0 à 65,0 |
| cire d'origine synthétique ou naturelle | 0,5 à 5,0 |
| agents tensioactifs | 25,0 à 60,0 |
| solvant organique miscible dans l'eau | 3,0 à 20,0 |
| Eau | 0 à 10,0. |

2. Composition selon la revendication 1, dans laquelle le fluide de silicone est un polymère de silice à modification alkyle ayant une viscosité de 200 à 100 000 cSt à 25 °C.

3. Composition selon la revendication 2, dans laquelle le polymère de silice à modification alkyle est le polydiméthylsiloxane.

4. Composition selon l'une quelconque des revendications précédentes, dans laquelle la cire d'origine naturelle est la cire de carnauba ou la cire d'abeille.

5. Composition selon l'une quelconque des revendications précédentes, dans laquelle la cire d'origine synthétique est la cire de silicone.

6. Composition selon l'une quelconque des revendications précédentes, dans laquelle la teneur de l'agent tensioactif qui est un mélange d'oxyde d'amine (N-oxyde) substitué au niveau de l'atome d'azote et d'éthers d'alcool gras de polyoxyéthylène représente 1 à 20 % de la teneur totale des agents tensioactifs.

7. Composition selon l'une quelconque des revendications précédentes, dans laquelle la teneur de l'agent tensioactif qui est un mélange d'oxyde d'amine (N-oxyde) substitué au niveau de l'atome d'azote et d'éthers d'alcool gras de polyoxyéthylène est un mélange de N-oxyde de N,N-diméthyldodécilamine et d'un éther d'alcool d'acide gras de polyoxyéthylène.

8. Composition selon l'une quelconque des revendications précédentes, dans laquelle la teneur de l'agent tensioactif ayant la formule suivante : 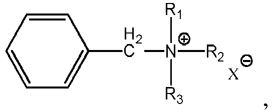 où R₁, R₂ et R₃ sont un alkyle en C₁ à C₄ ; X⁻ est F⁻, Cl⁻, Br⁻ ou un autre sel d'un acide inorganique fort ;
représente 80 à 99 % de la teneur totale des agents tensioactifs.

9. Composition selon l'une quelconque des revendications précédentes, dans laquelle le solvant organique miscible dans l'eau est n'importe lequel des alcools inférieurs (en C₂ à C₄ mono- ou di-substitués) ou des cétones inférieures (C₃ à C₅), mélangés à des acides carboxyliques inférieurs (C₁ à C₄) (en (C₁ à C₄) mono- ou di-substitués), et la teneur de l'acide carboxylique inférieur représente 2,0 à 5,0 % en poids d'un solvant organique.

10. Composition selon l'une quelconque des revendications précédentes, où elle est diluée avec de l'eau dans un rapport de 1:8 à 20, de préférence 1:10.

11. Tissu, toile ou éponge, imprégné avec la composition selon l'une quelconque des revendications précédentes.
